# EUROPEAN PATENT APPLICATION

(11) **EP 4 233 654 A1**
(43) Date of publication of application: **30.08.2023**
(21) Application number: 22159208.2
(22) Date of filing: 28.02.2022
(51) Int. Cl.: A47J 43/07

(54) **ELECTRIC-MOTOR KITCHEN APPLIANCE WITH SAFETY SWITCH**

(71) Applicant: BSH Hausgeräte GmbH, 81739 München (DE)
(72) Inventor: Simon, Davorin, 3212 Vojnik (SI); Golavsek, Samo, 3312 Prebold (SI); Leng, Sascha, 80637 München (DE)

(57) **Abstract**

The invention refers to a handheld device for preparing food, namely a stick blender, comprising a housing 1 containing an electric motor whose power up is controlled by a hand switch 2, which may be held by many fingers at the same time and which may be manually moved to an operating position, and with a safety switch 3 that must be operated at the same time as the hand switch 2, with merely maintaining the hand switch 2 in operating position allowing the continuous operation of the motor until said hand switch is released. To improve the reliability of the device it is proposed that the safety switch 3 is mounted on that hand switch 2.

## Description

The present invention relates to a handheld device for preparing food, namely a stick blender, comprising a housing containing an electric motor whose power up is controlled by a hand switch, which may be held by many fingers at the same time and which may be manually moved to an operating position, and with a safety switch that must be operated at the same time as the hand switch, with merely maintaining the hand switch in operating position allowing the continuous operation of the motor until said hand switch is released.

A disadvantage with known handheld devices for preparing food is that a certain risk exists that the kitchen appliance may be switched on by accidental and unintended pressing of a switch. This is a problem in particular with stick blenders which have unguarded rotating blades or a rotating pureeing attachment on their tool head. These blades or attachments are very sharp and cannot be guarded by a hood because of their function. As a result of unintended actuation of the switch the cutting blades can cause injury to a user of the handheld mixer.

This disadvantage is long since known. Therefore, safety regulations exist that such handheld devices cannot be switched on with a ball of 40 mm diameter in any possible way.

One way to design such handheld devices therefore provides switches or buttons that are moved a little bit inwardly from the outer surface of the device or to surround such movable switches or buttons with a stationary frame so that they cannot be activated by a ball of 40 mm diameter. But these constructions have the disadvantage that the switches or buttons are harder to reach, especially for people with bigger hands or palms, long fingernails etc.

Another way to design handheld devices in consideration of these safety regulations is the provision of a separate safety switch. In WO 2007/020143 A1 a device is disclosed that provides such a separate safety switch that has to be pressed. Pressing this separate safety switch unlocks a main switch that then is used to power up the electric motor of the device. Pressing only the main switch without pressing the separate safety switch in advance will not switch the device on.

The safety switch is located with a distance from the main switch to ensure that they cannot be activated together with only one ball of 40 mm diameter or only one finger, respectively.

A disadvantage of this device can be seen in the necessity of providing an electronic control that includes a time-integration circuit or the like so that the unlocking of the main switch is lifted again if the main switch is not actuated within a prescribed period of time after the safety switch is pressed.

It furthermore is cumbersome to have to press two separate switches and this within a prescribed period of time.

This disadvantage is overcome by devices as mentioned above that are known from EP 2 337 046 A1 or from EP 2 335 533 A1.

In these documents handheld devices for preparing food are disclosed with that the switch to power up the electric motor is a hand switch that is combined with a hand lever, which may be held by many fingers at the same time. Mounted on this hand lever is a separate safety button. When actuating the hand switch by pressing the hand lever this safety button is brought into a position opposite to a safety switch. Said safety switch is mounted on the housing of the device. The safety button comprises an actuating pin. This actuating pin is intended to be introduced into a hole of the safety switch when the safety button is pressed. This actuating pin actuates the safety switch. Accordingly pressing the safety button that is mounted on the hand lever actuates the safety switch.

The disadvantage of this known construction is that the actuating pin of the safety button has to be precisely aligned with the hole of the safety switch to achieve a trouble-free operation.

This is made even more difficult as the hand lever as well is provided with an actuating pin that is intended to be inserted into a hole at the housing of the device behind that the hand switch is located and actuated by the actuating pin of the hand lever.

So, two actuating pins have to be brought into alignment with corresponding holes that are provided on the surface of the housing. It has to be kept in mind that these holes must have small dimensions as to avoid the possibility of accumulating kitchen debris therein.

Therefore, a related construction has to be very precise to realise the necessary fit. This is especially difficult to achieve as the hand lever is removably fixed to the housing such that it can be easily dismantled for cleaning purposes. After a dismantling the hand lever then has to be remounted in precisely the same position to avoid any misalignments and to accomplish the reliability expected by the customers.

It is therefore the object of the present invention to provide an electric-motor kitchen appliance which allows an easy handling of the on/off switch as well as to improve the reliability of the device.

This object is achieved in accordance with the invention by a handheld device as defined by the features of the appended main claim. Further advantageous configurations which can be used individually in each case combined with each other in whatever configuration required are the subject matter of the various dependent claims.

According to the invention a handheld device for preparing food, namely a stick blender, comprises a housing containing an electric motor whose power up is controlled by a hand switch, which may be held by many fingers at the same time and which may be manually moved to an operating position, and with a safety switch that must be operated at the same time as the hand switch, with merely maintaining the hand switch in operating position allowing the continuous operation of the motor until said hand switch is released, with the safety switch being mounted on that hand switch.

According to the invention the safety button now is an included part of the safety switch.

While with the state of the art as discussed above the safety switch is mounted on the housing of the handheld device the safety switch of the invention is part of the hand switch, especially of the hand lever. Accordingly, the safety button when pushed acts directly onto the safety switch without the necessity to insert any actuating pin of the safety button into an opening of said safety switch. This significantly improves the reliability of the device.

With a preferred embodiment of the invention the actuating direction of the safety button is mainly the same as the actuating direction of the hand switch. This facilitates the handling of the device as the safety button now can be realised as pushbutton while with the state of the art the safety button was realised as slider. So, it is possible to now press the hand lever and the safety button with the fingers of one hand at the same time. In contrary to this the safety button according to the state of the art had to be move either with a finger or thumb of the other hand.

It is proposed that the safety button of the invention mechanically releases the mobility of the hand switch or hand lever. Like this a mechanical construction can be chosen that is simpler and thus cheaper to realise than an electronic design.

To realise such mechanical construction, it is proposed that the safety button is provided with a pushpin and that by actuating the safety button a mechanical switch blockage is moved out of its blocking position by said pushpin, said switch blockage blocking the mobility of the hand switch or hand lever, respectively.

In the embodiment as just explained the safety button, its pushpin and the switch blockage together form a safety switch. This safety switch is mounted on the hand switch.

With a preferred construction the switch blockage cooperates in its blocking position against a locking backrest provided at the housing. This construction minimises the number of parts needed for its realisation.

With an alternative embodiment of the invention the safety button is part of an electric switch which is mounted on the hand switch or hand lever, respectively, and which cooperates with an electronic device.

With all embodiments of the invention the safety button of the safety switch cannot be actuated with a ball of 40 mm diameter. To achieve this, it is especially proposed to form the hand switch with a protruding nose end forming a groove like channel in that the safety button is situated with its surface. The groove like channel has a curvature so narrow that a ball with a diameter of 40 mm cannot touch the surface of the safety button, thus fulfilling the official safety regulations as discussed above.

In a preferred embodiment the surface of the safety button projects from the surface of the hand switch within said groove to facilitate the haptic perception of the safety button's position at the hand switch.

The present invention thus provides a kitchen device as discussed above that is safe and easy to handle as well as cost-efficient to produce

Further features and advantages of the invention can be learned from the enclosed drawings in which
- Fig. 1: shows a perspective view of the upper part of a stick blender;
- Fig. 2: a sectional view of a hand switch with mechanical safety switch in basic position;
- Fig. 3: a sectional view of a hand switch with mechanical safety switch in actuated position;
- Fig. 4: a sectional view of a hand switch with electronic safety switch in basic position;
- Fig. 5: a sectional view of a hand switch with electronic safety switch in actuated position;
- Fig. 6: a side view showing the position of a test ball for testing security regulations.

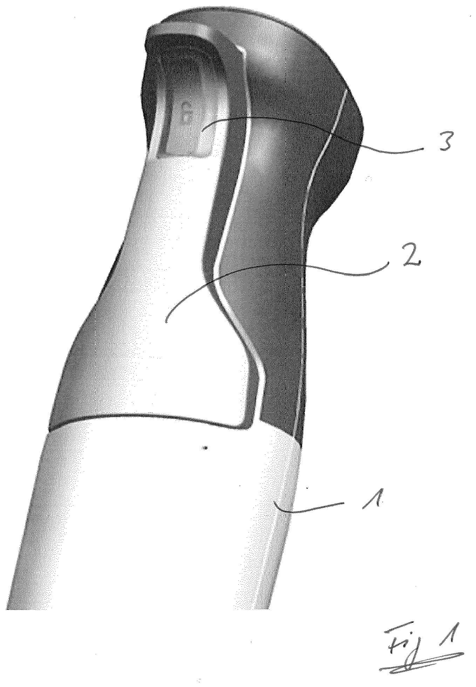

Figure 1 shows a perspective view of an upper part of a stick blender. This upper part forms the blender's hand piece. Within the visible housing 1 is the not visible electric motor of the blender that is powered up by activating their hand switch 2. At its upper part the hand switch 2 is provided with a safety switch 3 that has to be pressed before the hand switch 2 can be actuated.

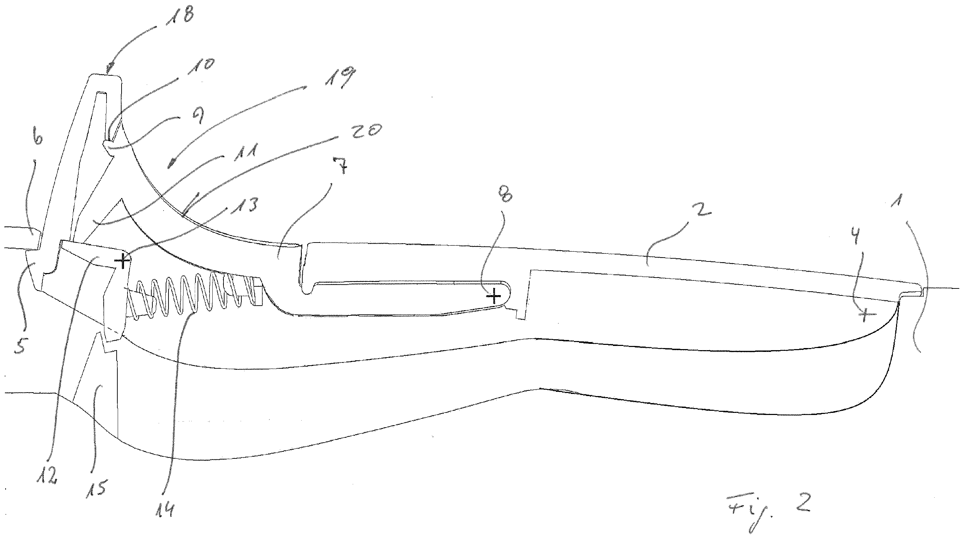

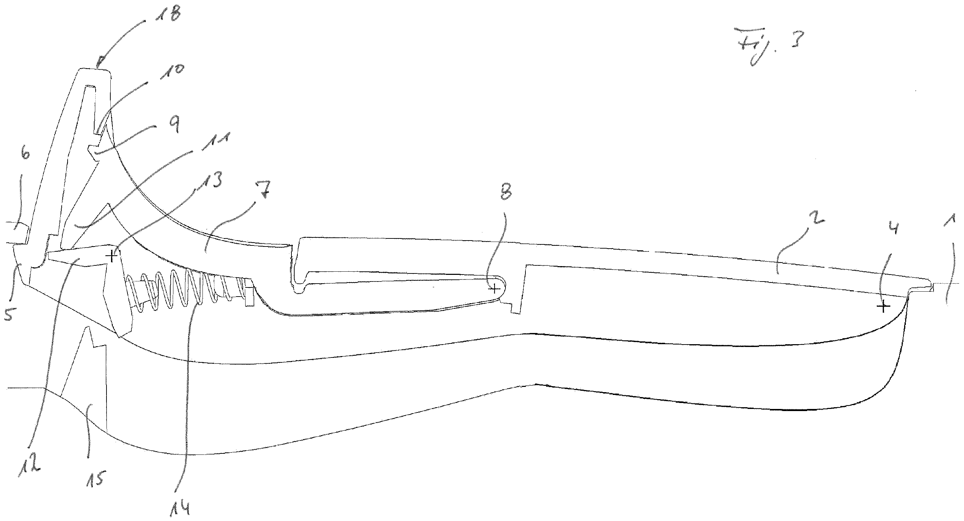

This is explained with figures 2 and 3 showing a sectional view of the hand switch 2. In figure 2 a hand switch 2 is shown that is fixed to the housing 1 by a first hinge 4.

The hand switch 2 thus forms a hand lever that works against a (not shown) spring which presses the hand lever with a protrusion 5 against a stop 6 formed by the housing 1.

The hand switch 2 itself carries a safety button 7 that is affixed to the hand switch 2 by a second hinge 8. This safety button 7 works against a further spring (that as well is not shown) which presses it with a further protrusion 9 against a further stop 10 formed at the hand switch 2.

On its backside safety button 7 carries a pushpin 11 that works against a L-formed switch blockage 12 that is affixed to the hand switch 2 by a third hinge 13. Safety button 7, pushpin 11 and switch blockage 12 together form the security switch 3.

In its basic position the switch blockage 12 cooperates with a locking backrest 15 that is provided at the housing 1. Like this it blocks the moving of the hand switch 2 into its switch-on position.

By pressing the safety button 7 inwardly with regard to the housing 1 the pushpin 11 turns the switch blockage 12 around the third hinge 13 against the load of a spring 14 so that the switch blockage 12 is moved out of its blocking position as shown in figure 2 in that it cooperates with the locking backrest 15.

The situation with a pressed safety button 7 and a switch blockage 12 moved out of this blocking position is shown in figure 3. In this figure the same elements are designated with the same reference numbers.

Now that the safety buttons 7 is pressed inwardly and the switch blockage 12 is moved out of its blocking position the hand switch 2 can be actuated as well, that is by pressing it inwardly with regard to the housing 1 as well. By this the connected electric motor is switched on by a not shown electric switch that is connected with the hand lever to form the hand switch 2 with it. The electric motor keeps on its switched-on status even if the safety button 7 is released. Thus, it is sufficient that after the motor is switched on the hand switch 2 or the hand lever, respectively, is pressed, while the safety button 7 can be released. The hand switch 2 or the hand lever, respectively, can be held in its switched-on position by many fingers. This facilitates the handling of the stick blender.

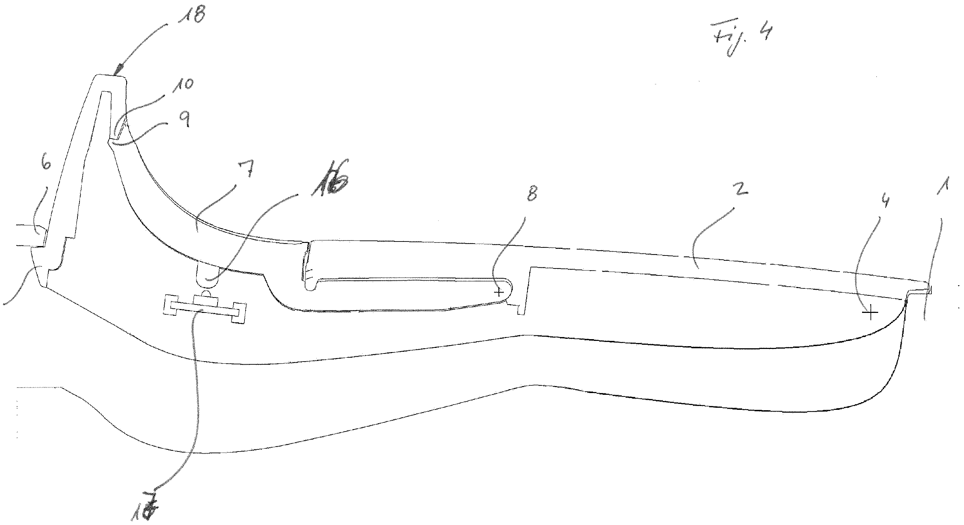

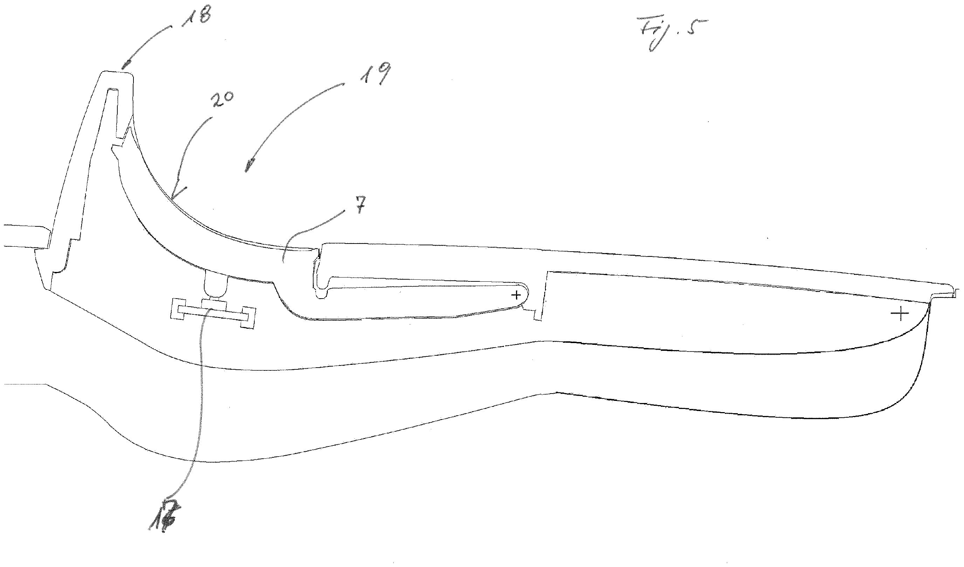

In figures 4 and 5 a comparable construction is shown. In these figures again the same elements are designated with the same reference numbers.

With this embodiment the hand switch 2 again comprises a hand lever that works against a (not shown) spring which presses the hand lever with a protrusion 5 against a stop 6 formed by the housing 1.

The hand switch 2 or the hand lever, respectively, again carries a safety button 7 that is affixed to the hand switch 2 by a second hinge 8. This safety button 7 works against a further spring (that as well is not shown) which presses it with a further protrusion 9 against a further stop 10 formed at the hand switch 2.

On its backside safety button 7 carries a cam 16 that works against a switch 17 that is affixed to the hand switch 2. In this case safety button 7, cam 16 and unlock switch 17 together form the safety switch 3.

By pressing the safety button 7 the cam 16 touches the unlock switch 17 and switches it into on-position.

The situation with a pressed safety button 7 and a unlock switch 17 moved into on-position is shown in figure 5.

After the safety button 7 is pressed inwardly with regard to the housing land the unlock switch 17 is in its on-position a related signal is given to a not shown electronic device. When now the hand switch 2 is further actuated by pushing the hand switch 2 the switch connected with the hand lever of hand switch 2 gives an on-signal to the electronic device that then realises that both switches were moved into on-position in the prescribed order.

The electronic device then switches on the electric motor connected with it. The electronic device allows the electric motor to keep on its switched-on status even if the safety button 7 and the related unlock switch 17 are released. Thus, it is again sufficient that after the motor is switched on the hand switch 2 or the hand lever, respectively, is pressed, while the safety button 7 can be released.

As discussed, the hand switch 2 can be held through its hand lever in its switched-on position by many fingers, what facilitates the handling of the stick blender.

To ensure that the safety button 7 cannot be actuated unintentionally and to fulfil the safety regulations provided for that the hand switch 2 of the shown embodiments are provided with a protruding nose 18. Adjecent the protruding nose 18 the hand switch 2 forms a groove like channel 19. The safety button 7 is situated with its surface 20, that can be touched with a finger to press down this safety button 7, within that groove like channel 19.

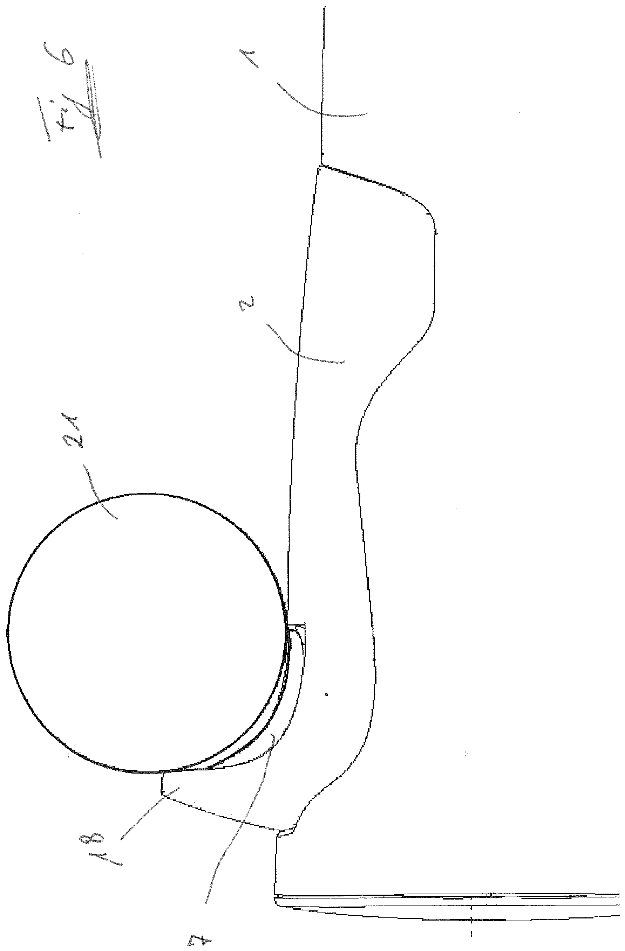

As is shown in figure 6 the groove like channel 19 has a curvature or radius of its surface - in that the surface 20 of the safety button 7 is situated - that is so small that a test ball 21 with a diameter of 40 mm will not touch the surface of the groove like channel 19 and so not the surface 20 of the safety button 7, but only the end of the protruding nose 18 as well as the surface of the hand switch 2 or its hand lever, respectively.
- 1.: housing
- 2.: hand switch
- 3.: safety switch
- 4.: first hinge
- 5.: protrusion
- 6.: stop
- 7.: safety button
- 8.: second hinge
- 9.: further protrusion
- 10.: further stop
- 11.: pushpin
- 12.: switch blockage
- 13.: third hinge
- 14.: spring
- 15.: backrest
- 16.: cam
- 17.: unlock switch
- 18.: nose
- 19.: channel
- 20.: surface
- 21.: test ball

## Claims

1. Handheld device for preparing food, namely a stick blender, comprising a housing (1) containing an electric motor whose power up is controlled by a hand switch (2), which may be held by many fingers at the same time and which may be manually moved to an operating position, and with a safety switch (3) that must be operated at the same time as the hand switch (2), with merely maintaining the hand switch (2) in operating position allowing the continuous operation of the motor until said hand switch is released,
**characterised in that**
the safety switch (3) is mounted on that hand switch (2).

2. Handheld device according to claim 1,
**characterized in that**
the actuating direction of the safety switch (3) is mainly the same as the actuating direction of the hand switch (2).

3. Handheld device according to claim 1 or 2,
**characterized in that**
actuating the safety switch (3) mechanically releases the movability of the hand switch (2).

4. Handheld device according to one of claims claim 1 to 3,
**characterised in that**
the safety switch (3) is provided with a pushpin (11) and that by actuating the safety switch (3) a mechanical switch blockage (12) is moved out of a blocking position, blocking the movability of the hand switch (2).

5. Handheld device according to one of claims 1 to 4,
**characterised in that**
the switch blockage (12) cooperates in blocking position against a locking backrest (15) provided at the housing (1)

6. Handheld device according to one of the preceding claims,
**characterised in that**
the safety switch (3) comprises an electric unlock switch (17) that is mounted on the hand switch (2).

7. Handheld device according to one of the preceding claims,
**characterised in that**
the electric unlock switch (17) unlocks an electronic to power up the electric motor when the hand switch (2) is actuated
